# FASCICULE DE BREVET EUROPEEN

(11) **EP 2 020 373 B1**
(45) Date de publication et mention de la délivrance du brevet: **07.04.2010**
(21) Numéro de dépôt: 08290700.7
(22) Date de dépôt: 16.07.2008
(51) Int. Cl.: B62M 3/08

(54) **Pédale automatique de cycle à ressort à lame**
Automatisches Radpedal mit Blattfeder
Automatic cycle pedal with leaf spring

(30) Priorité: 01.08.2007 FR 0705638
(43) Date de publication de la demande: 04.02.2009
(73) Titulaire: Look Cycle International, 58000 Nevers (FR)
(72) Inventeur: Hillairet, Jean-Marc, 58640 Varennes- Vauzelles (FR); Roudergues, Frédéric, 58000 Nevers (FR)
(74) Mandataire: Boutin, Antoine

(56) Documents cités:
- EP-A- 0 146 454
- EP-A- 0 353 169
- EP-A- 0 953 502
- DE-A1- 19 518 084
- DE-U1- 29 712 758
- FR-A- 2 714 014
- US-B1- 6 477 917

## Description

La présente invention concerne une pédale automatique pour cycle, en particulier une pédale pour cycle de route, permettant la solidarisation d'une chaussure de cycliste contre la pédale.

La pédale automatique comporte de manière classique un corps de pédale monté rotatif sur un axe de pédale apte à être relié à une manivelle de pédalier. La notion de "automatique" est liée au fait que la chaussure porte une cale ou plaque de retenue fixée sous la semelle de la chaussure du cycliste et destinée à déclencher une fixation à mains libres en sollicitant tout simplement cette plaque de retenue contre des moyens d'accrochage prévus sur la pédale. La pédale est en outre pourvue d'une surface d'appui au-dessus de l'axe de pédale contre laquelle vient se poser la plaque de retenue.

Les moyens d'accrochage prévus sur le corps de pédale comprennent en général un organe avant fixe d'accrochage de la plaque de retenue et un organe d'accrochage arrière mobile monté pivotant sur le corps de pédale autour d'un axe de rotation parallèle à l'axe de pédale, entre une position de retenue de ladite plaque en prise entre les organes d'accrochage avant et arrière, et une position de libération de la plaque par le pivotement dudit organe d'accrochage arrière à l'encontre de l'action d'un moyen de rappel élastique dont l'une des extrémités est reliée à l'organe d'accrochage arrière et l'autre extrémité est reliée audit corps de pédale.

Une telle pédale automatique à plaque de retenue et de liaison rapide est classique et se trouve décrit dans par exemple la publication EP 0 146 454.

L'enclenchement de la platine sur la pédale se fait de manière automatique par l'introduction de l'extrémité avant de la plaque de retenue dans l'organe d'accrochage avant sur la pédale et par un mouvement de pivotement de la platine vers le bas, ce qui fait pivoter l'organe d'accrochage arrière vers l'extérieur à l'encontre de l'effet du moyen de rappel élastique afin de permettre l'introduction de l'extrémité libre de celui-ci dans l'organe d'accrochage arrière. Ensuite, l'organe d'accrochage arrière revient automatiquement à sa position initiale par l'effet de l'action du moyen de rappel élastique.

Le déclenchement de la plaque de retenue, c'est-à-dire la libération de celle-ci de la pédale, se fait par un mouvement de rotation de la plaque autour d'un axe vertical à proximité de l'extrémité avant de la plaque, ce qui provoque le pivotement de l'organe d'accrochage arrière qui ainsi lâche sa prise. L'interaction entre ces organes est décrite en détail dans le document cité ci-dessus. Par ailleurs, cette libération de la plaque de retenue peut aussi être commandée de façon indépendante de la volonté du cycliste lors d'une chute, lorsque le pied du cycliste effectue le mouvement requis ; la pédale joue dans ce cas un rôle de sécurité et de protection.

On connaît un grand nombre de pédales automatiques qui diffèrent les unes des autres essentiellement par la mise en oeuvre des moyens de retenue automatique utilisés pour relier la cale au corps de pédale. Elles ont toutes en commun qu'elles comportent un moyen de rappel élastique de l'organe d'accrochage arrière mobile qui précontraint cet organe vers une position de retenue de la plaque sur le corps de pédale.

L'une des extrémités de ce moyen de rappel élastique est ainsi reliée à l'organe d'accrochage arrière, alors que l'autre extrémité est reliée au corps de pédale. Généralement, le moyen de rappel élastique est constitué par un ressort hélicoïdal métallique qui peut fonctionner en compression comme dans la publication mentionnée ci-dessus EP 0 146 454, ou en torsion comme dans la publication FR 2 620410.

Ces ressorts hélicoïdaux métalliques présentent un certain nombre d'inconvénients du fait qu'ils sont limités en encombrement, sont caractérisés par des variations de raideur importantes, et par suite exigent des tolérances de fabrication assez large ou bien des dispositifs supplémentaires de réglage de la tension du ressort. Ils sont de part leur nature sensibles à la corrosion et à la fatigue.

Le document DE 195 18 084 divulgue une pédale automatique selon le préambule de la revendication 1. Même si son ressort agissant sur l'organe d'accrochage arrière mobile est à précontrainte réglable, ce ressort présente néanmoins les inconvénients déjà mentionnés.

On connaît également l'utilisation de ressorts en élastomère destinés à pallier ces inconvénients, mais ces ressorts en présentent d'autres du fait qu'ils sont très influencés par la température et que leur fluage vient réduire leur performance et donc restreindre leurs possibilités d'utilisation.

Le but de l'invention est de remédier à ces inconvénients en proposant un moyen de rappel élastique de l'organe d'accrochage arrière de la pédale qui est extrêmement simple à fabriquer et à monter, tout en gardant le principe de fonctionnement classique de l'organe d'accrochage arrière qui est mobile en pivotement autour d'un axe.

L'objet de l'invention est une pédale automatique de cycle comportant un corps de pédale monté rotatif sur un axe de pédale apte à être relié à une manivelle de pédalier, ledit corps de pédale comportant des moyens d'accrochage d'une plaque de retenue fixée sous une chaussure de cycliste, lesdits moyens d'accrochage étant composés d'un organe d'accrochage avant fixe et d'un organe d'accrochage arrière mobile monté pivotant sur ledit corps de pédale autour d'un axe de rotation sensiblement parallèle audit axe de pédale, entre une position de retenue de ladite plaque en prise entre lesdits organes d'accrochage avant et arrière, et une position de libération de ladite plaque par le pivotement dudit organe d'accrochage arrière à l'encontre de l'action d'un moyen de rappel élastique disposé dans un logement du corps de pédale et dont l'une des extrémités est reliée audit organe d'accrochage arrière, alors que l'autre extrémité est reliée audit corps de pédale, caractérisée par le fait que ledit moyen de rappel élastique comporte un organe élastique allongé s'étendant dans un plan longitudinal par rapport audit corps de pédale de manière à être sollicité le long de son axe longitudinal en flambage par l'organe d'accrochage arrière lorsque celui-ci est pivoté vers la position de libération de ladite plaque de retenue.
Selon d'autres caractéristiques de l'invention :
- ledit organe élastique est précontraint en flambage ;
- ledit logement est latéralement disposé du côté extérieur dudit corps de pédale et ouvert au moins vers l'arrière ;
- l'extrémité arrière dudit organe élastique est librement reçue dans un évidement arrière prévu dans la partie inférieure dudit organe d'accrochage arrière et décalé vers le bas par rapport audit axe de rotation de celui-ci ;
- ledit évidement arrière présente un fond arrondi complémentaire de la forme de l'extrémité arrière dudit organe élastique de manière à former une liaison pivot ;
- l'extrémité avant dudit organe élastique est librement reçue dans un évidement avant prévu dans ledit logement, cet évidement présentant un fond arrondi complémentaire de la forme de l'extrémité avant dudit organe élastique de manière à former une liaison pivot ;
- ledit organe élastique est une lame ;
- ladite lame est en matériau composite ;
- au moins l'extrémité arrière dudit organe élastique est pourvue d'une garniture en forme de U ;
- ledit évidement arrière est disposé dans un prolongement dudit organe d'accrochage arrière vers le bas ;
- ledit prolongement est immédiatement en dessous dudit évidement arrière dévié vers l'avant de manière à prolonger la partie inférieure de celui-ci ;
- ledit organe élastique s'étend sur au moins deux tiers de la longueur du corps de pédale ;
- ledit organe élastique est sollicité en flambage verticalement vers le bas ;
- ledit organe élastique est sollicité en flambage verticalement vers le haut ;
- ledit organe élastique est sollicité en flambage horizontalement vers l'extérieur ;
- ledit organe élastique est sollicité en flambage horizontalement vers l'intérieur ;
- une butée est prévue dans ledit logement pour limiter le flambage dudit organe élastique à une seule direction.

D'autres caractéristiques et avantages de l'invention ressortiront de la description qui va suivre de plusieurs modes de réalisation non limitatifs de l'invention, en référence aux figures annexées dans lesquelles :
- la figure 1 est une vue en perspective d'une pédale automatique selon un premier mode de réalisation de l'invention lorsque l'organe élastique effectue un flambage vers le haut, avec précontrainte ;
- la figure 2 est une vue latérale de la pédale de la figure 1 ;
- la figure 3 est une vue éclatée de la pédale de la figure 1 ;
- la figure 4 est une vue en perspective illustrant une plaque de retenue en position retenue en prise entre les organes d'accrochages sur la pédale selon l'invention ;
- la figure 5 est une vue latérale illustrant la plaque de retenue dans sa position de libération de sa prise entre les organes d'accrochages sur la pédale ; et
- la figure 6 est une vue en perspective illustrant la plaque de retenue dans sa position de libération de sa prise entre les organes d'accrochages sur la pédale ;
- la figure 7 est une vue latérale d'une pédale automatique selon un deuxième mode de réalisation de l'invention lorsque l'organe élastique effectue un flambage vers le bas, avec précontrainte ;
- la figure 8 est une vue latérale d'une pédale automatique selon un troisième mode de réalisation de l'invention lorsque l'organe élastique effectue un flambage vers le bas, sans précontrainte.

Dans les figures, les éléments identiques ou équivalents porteront les mêmes signes de référence.

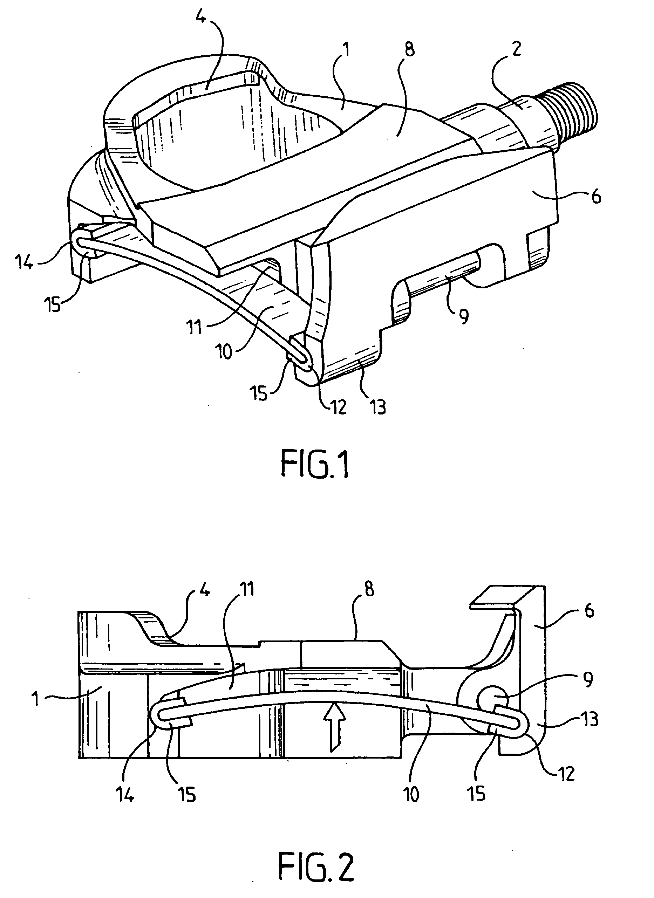

Les figures 1 à 6 montrent un premier mode de réalisation de la pédale automatique selon l'invention. La pédale comporte de manière classique un corps de pédale 1 monté rotatif sur un axe de pédale 2 destiné à être relié à une manivelle de pédalier de cycle (non représentée).

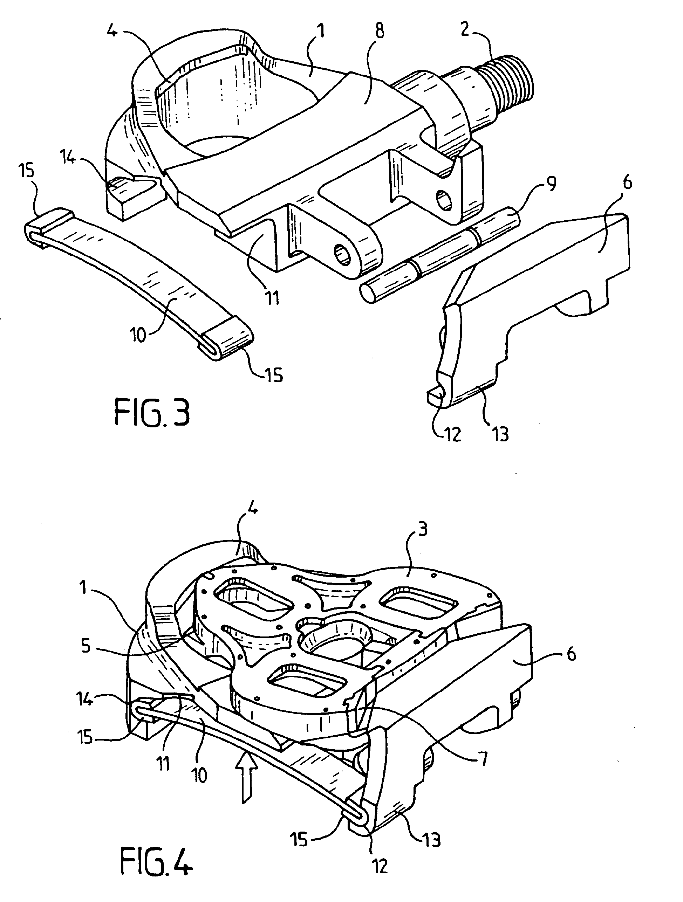

Le corps de pédale 1 est muni de moyens d'accrochage d'une cale ou plaque de retenue 3 illustrée sur les figures 4 à 6. Cette plaque de retenue est fixée sous la semelle d'une chaussure de cycliste (non représentée).

Les moyens d'accrochage sont composés d'un organe d'accrochage avant fixe apte à coopérer avec un organe de liaison mâle 5 sous forme d'une lèvre prévue à l'avant de la plaque de retenue 3, et d'un organe d'accrochage arrière mobile 6 apte à coopérer avec un organe de liaison femelle 7 sous forme d'un évidement prévu à l'arrière de la plaque de retenue (voir figure 4).

La pédale est en outre pourvue d'une surface d'appui 8 au-dessus de l'axe de pédale 2 contre laquelle vient se poser la plaque de retenue 3.

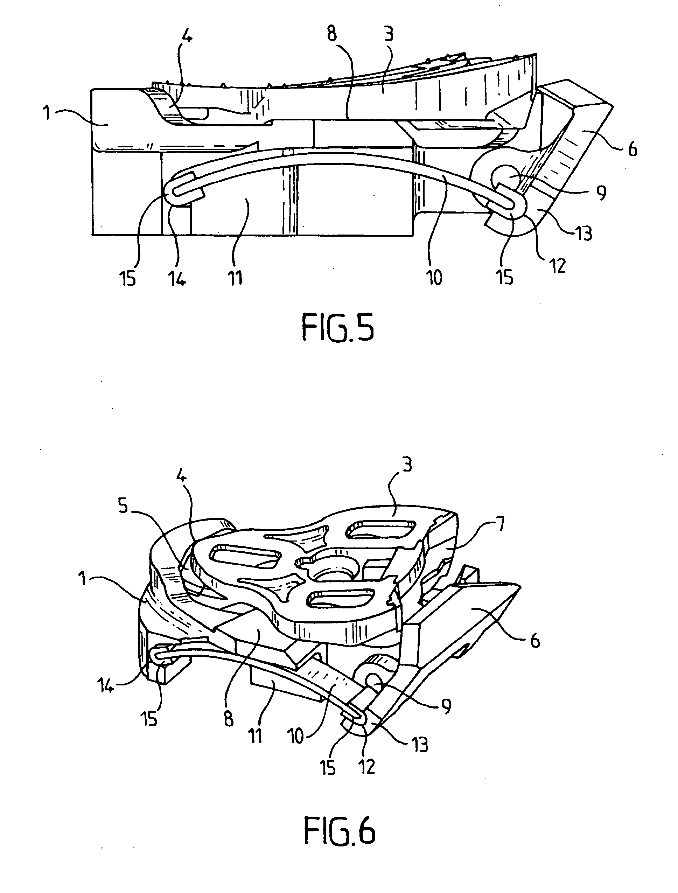

L'organe d'accrochage arrière 6 a la forme d'un levier monté pivotant sur le corps de pédale 1 autour d'un axe de rotation 9 sensiblement parallèle à l'axe de pédale 2, entre une position de retenue illustrée à la figure 4 dans laquelle la plaque de retenue 3 est en prise entre les organes d'accrochage avant et arrière 4, 6, et une position de libération illustrée aux figures 5 et 6 dans laquelle la plaque de retenue 3 est normalement pivotée vers l'extérieur ou bien vers l'intérieur, par exemple lors d'une chute, comme cela est illustré à la figure 6 pour mieux montrer les détails de l'invention.

L'organe d'accrochage arrière 6 est pivoté vers l'arrière à partir de la position de retenue à la position de libération de la plaque de retenue 3 à l'encontre de l'action d'un moyen de rappel élastique dont l'une des extrémités est reliée à l'organe d'accrochage arrière 6 et l'autre extrémité est reliée au corps de pédale 1.

Selon l'invention, ce moyen de rappel élastique comporte un organe élastique allongé 10 s'étendant dans un plan longitudinal par rapport au corps de pédale 1 de manière à être sollicité le long de son axe longitudinal en flambage par l'organe d'accrochage arrière 6 lorsque celui-ci est pivoté vers la position de libération de la plaque de retenue 3.

Cet organe élastique allongé 10 peut être tout simplement constitué par fil métallique présentant l'élasticité souhaitée, mais il est de préférence constitué d'une lame élastique comme cela est illustré sur les figures. La lame 10 s'étend sur au moins deux tiers de la longueur de la pédale en étant disposée dans un logement longitudinal 11 prévu dans le corps de pédale 1. Ce logement 11 est ouvert au moins vers l'arrière afin de permettre de relier l'une des extrémités de la lame 10 à l'organe d'accrochage arrière 6.

Dans le mode de réalisation illustré sur les figures, ce logement 11 est latéralement disposé du côté extérieur du corps de pédale 1 et est en outre ouvert vers le bas et sur le côté. Le logement 11 peut naturellement être fermé vers le bas et sur le côté pour ne garder qu'une ouverture vers l'arrière.

Dans le mode de réalisation illustré sur les figures 1 à 6, la partie supérieure du logement 11 est adaptée pour permettre à la lame 10 d'être sollicitée le long de son axe longitudinal en flambage verticalement vers le haut. Le sens du flambage est montré par une flèche sur certaines des figures.

Selon une autre caractéristique de l'invention, la lame 10 est précontrainte en flambage afin de faciliter le début de son armement en supprimant le pic d'effort nécessaire pour faire passer la lame d'une extension droite à une extension flambée.

L'extrémité arrière de la lame 10 est avantageusement librement reçue dans un évidement arrière allongé 12 prévu dans la partie inférieure de l'organe d'accrochage arrière 6 et décalé vers le bas par rapport à l'axe de rotation 9 de celui-ci. Cet évidement arrière est dans le mode de réalisation illustré disposé dans un prolongement 13 de l'organe d'accrochage arrière 6 vers le bas. Ce prolongement est immédiatement en dessous de l'évidement arrière 12 dévié vers l'avant de manière à prolonger la partie inférieure de celui-ci en formant une butée vers le bas pour l'extrémité de la lame pour l'empêcher de glisser hors de l'évidement.

L'extrémité avant de la lame 10 peut être fixe et encastrée dans une paroi verticale du logement 11, mais elle est de préférence également librement reçue dans un évidement avant allongé 14 afin d'éviter les sollicitations importantes autour de l'encastrement du corps de pédale qui peut par exemple être en matière plastique injectée.

L'évidement arrière 12 et l'évidement avant 13 présentent avantageusement un fond arrondi à forme complémentaire de la forme des extrémités de la lame pour former des liaisons pivot. Dans l'exemple illustré avec un organe élastique en forme de lame, ce fond est cylindrique, alors que s'il l'on utilise un fil à la place de la lame, ce fond peut être sphérique.

La lame 10 peut avantageusement être en matériau composite, par exemple en fibres de carbone, et on peut alors, par le choix de la composition des couches, obtenir la valeur de raideur en flexion que l'on souhaite pour la lame.

Les avantages d'une lame en matériau composite sont, entre autres, une excellente résistance à la corrosion, ainsi qu'une résistance à la fatigue pratiquement illimitée, à condition que la lame soit correctement dimensionnée.

Cependant, une lame en matériau composite est généralement obtenue par un assemblage de couches de renfort superposées, séparées par des couches de résine moins résistante et il y a un risque de délaminage aux extrémités à long terme ou tout au moins une usure prématurée des couches en contact aux extrémités qui supportent une grande pression.

Pour pallier cette usure par frottement et matage, chaque extrémité de la lame 10 est avantageusement protégée par une garniture en forme de U 15 en matériau suffisamment dur, par exemple en métal.

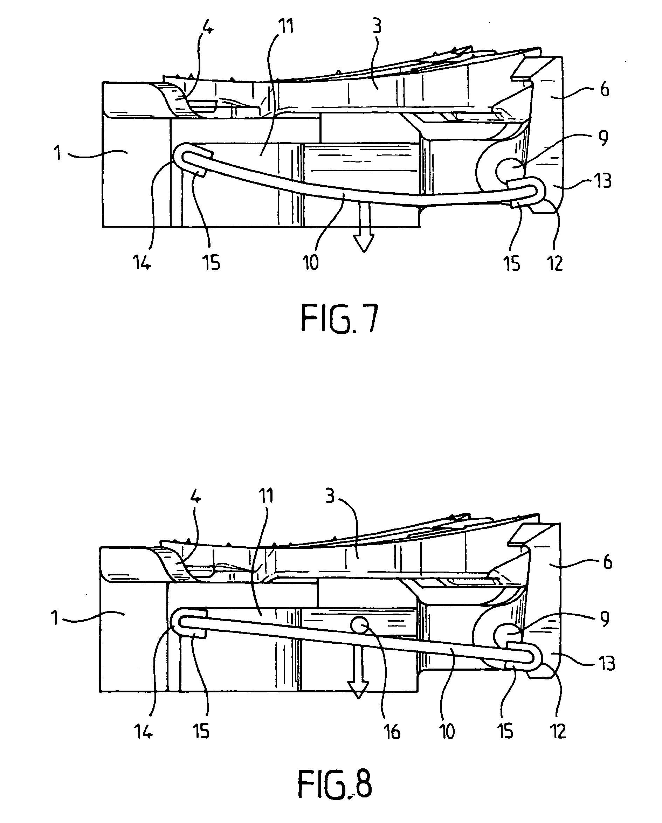

La figure 7 illustre un deuxième mode de réalisation de l'invention qui diffère du premier par le fait que la lame 10 est montée en flambage verticalement vers le bas. La lame 10 est montée précontrainte dans cette direction.

La figure 8 illustre un troisième mode de réalisation de l'invention dans lequel la lame 10 est également montée en flambage verticalement vers le bas, mais sans précontrainte.

Finalement, la figure 8 montre la présence d'une butée 16 placée au dessus de la lame 10 pour limiter le flambage de celle-ci à une seule direction, c'est-à-dire vers le bas. Dans l'exemple illustré, cette butée a la forme d'un doigt cylindrique qui fait saillie dans le logement 11 et qui peut éventuellement être réglable en hauteur afin d'obtenir une précontrainte de la lame.

Bien entendu, l'invention n'est pas limitée aux modes de réalisation décrits et illustrés sur les figures, mais de nombreuses variantes sont envisageables sans pour autant sortir du cadre de l'invention. Il est par exemple possible de monter l'organe élastique 10 de sorte qu'il soit sollicité en flambage horizontalement vers l'intérieur ou vers l'extérieur.

En outre, même si l'emplacement du logement longitudinal 11 sur le côté extérieur est à préférer, il serait également possible de le prévoir centralement dans le corps de pédale 1, mais dans ce cas il est nécessaire de déporter la lame vers le bas pour la placer à distance en dessous de l'axe de pédale. Il est évident que dans ce cas, il est avantageux que la lame soit montée en flambage vers le bas en dessous de l'axe de pédale. Il en est de même si l'on souhaite utiliser une deuxième lame élastique placée dans un deuxième logement sur le côté intérieur du corps de pédale.

## Revendications

1. Pédale automatique de cycle comportant un corps de pédale (1) monté rotatif sur un axe de pédale (2) apte à être relié à une manivelle de pédalier, ledit corps de pédale (1) comportant des moyens d'accrochage (4, 6) d'une plaque de retenue (3) fixée sous une chaussure de cycliste, lesdits moyens d'accrochage étant composés d'un organe d'accrochage avant fixe (4) et d'un organe d'accrochage arrière mobile (6) monté pivotant sur ledit corps de pédale (1) autour d'un axe de rotation (9) sensiblement parallèle audit axe de pédale (2), entre une position de retenue de ladite plaque (3) en prise entre lesdits organes d'accrochage avant et arrière (4, 6), et une position de libération de ladite plaque (3) par le pivotement dudit organe d'accrochage arrière (6) à l'encontre de l'action d'un moyen de rappel élastique (10) disposé dans un logement (11) du corps de pédale (2) et dont l'une des extrémités est reliée audit organe d'accrochage arrière (6), alors que l'autre extrémité est reliée audit corps de pédale (1), **caractérisée par le fait que** ledit moyen de rappel élastique comporte un organe élastique allongé (10) s'étendant dans un plan longitudinal par rapport audit corps de pédale (1) de manière à être sollicité le long de son axe longitudinal en flambage par l'organe d'accrochage arrière (6) lorsque celui-ci est pivoté vers la position de libération de ladite plaque de retenue.

2. Pédale automatique selon la revendication 1, **caractérisée par le fait que** ledit organe élastique (10) est précontraint en flambage.

3. Pédale automatique selon la revendication 1 ou 2, **caractérisée par le fait que** ledit organe élastique (10) est une lame.

4. Pédale automatique selon la revendication 3, **caractérisée par le fait que** ladite lame (10) est en matériau composite.

5. Pédale automatique selon l'une quelconque des revendications précédentes, **caractérisée par le fait que** ledit logement (11) est latéralement disposé du côté extérieur dudit corps de pédale (1) et ouvert au moins vers l'arrière.

6. Pédale automatique selon l'une quelconque des revendications précédentes, **caractérisée par le fait que** l'extrémité arrière dudit organe élastique (10) est librement reçue dans un évidement arrière (12) prévu dans la partie inférieure dudit organe d'accrochage arrière (6) et décalé vers le bas par rapport audit axe de rotation (9) de celui-ci.

7. Pédale automatique selon la revendication 6, **caractérisée par le fait que** ledit évidement arrière (12) présente un fond arrondi complémentaire de la forme de l'extrémité arrière dudit organe élastique (10) de manière à former une liaison pivot.

8. Pédale automatique selon la revendication 7, **caractérisée par le fait que** l'extrémité avant dudit organe élastique (10) est librement reçue dans un évidement avant (14) prévu dans ledit logement (11), cet évidement présentant un fond arrondi complémentaire de la forme de l'extrémité avant dudit organe élastique (10) de manière à former une liaison pivot.

9. Pédale automatique selon l'une quelconque des revendications 6 à 8, **caractérisée par le fait qu'**au moins l'extrémité arrière dudit organe élastique (10) est pourvue d'une garniture en forme de U (15).

10. Pédale automatique selon l'une quelconque des revendications 6 à 9, **caractérisée par** le fait ledit évidement arrière (12) est disposé dans un prolongement (13) dudit organe d'accrochage arrière (6) vers le bas.

11. Pédale automatique selon la revendication 10, **caractérisée par le fait que** ledit prolongement (13) est immédiatement en dessous dudit évidement arrière (12) dévié vers l'avant de manière à prolonger la partie inférieure de celui-ci.

12. Pédale automatique selon l'une quelconque des revendications précédentes, **caractérisée par le fait que** ledit organe élastique (10) s'étend sur au moins deux tiers de la longueur du corps de pédale (1).

13. Pédale automatique selon l'une quelconque des revendications précédentes, **caractérisée par le fait que** ledit organe élastique (10) est sollicité en flambage verticalement vers le bas.

14. Pédale automatique selon l'une quelconque des revendications 1 à 12, **caractérisée par le fait que** ledit organe élastique (10) est sollicité en flambage verticalement vers le haut.

15. Pédale automatique selon l'une quelconque des revendications 1 à 12, **caractérisée par le fait que** ledit organe élastique (10) est sollicité en flambage horizontalement vers l'extérieur.

16. Pédale automatique selon l'une quelconque des revendications 1 à 12, **caractérisée par le fait que** ledit organe élastique (10) est sollicité en flambage horizontalement vers l'intérieur.

17. Pédale automatique selon l'une quelconque des revendications précédentes, **caractérisée par le fait qu'**une butée est prévue dans ledit logement pour limiter le flambage dudit organe élastique (10) à une seule direction.

## Claims

1. Automatic cycle pedal comprising a pedal body (1) rotatably mounted on a pedal shaft (2) capable of being connected to a pedal crank, said pedal body (1) comprising hooking means (4, 6) for a retaining plate (3) fixed under the footwear of a cyclist, said hooking means being composed of a front fixed hooking member (4) and a mobile rear hooking member (6) pivotably mounted on said pedal body (1) about an axis of rotation (9) substantially parallel to said pedal shaft (2), between a retaining position of said plate (3) engaged between said front and rear hooking members (4, 6) and a position of release of said plate (3) by the pivoting of said rear hooking member (6) in opposition to the action of an elastic return means (10) arranged in a housing (11) of the pedal body (2) and of which one of the ends is connected to said rear hooking member (6), whilst the other end is connected to said pedal body (1), **characterised in that** said elastic return means comprises an elongate elastic member (10) extending in a longitudinal plane relative to said pedal body (1) so as to be stressed along its longitudinal axis in buckling by the rear hooking member (6) when said hooking member is pivoted towards the position of release of said retaining plate.

2. Automatic pedal according to Claim 1, **characterised in that** said elastic member (10) is prestressed in buckling.

3. Automatic pedal according to Claim 1 or 2, **characterised in that** said elastic member (10) is a leaf.

4. Automatic pedal according to Claim 3, **characterised in that** said leaf (10) is made of composite material.

5. Automatic pedal according to any one of the preceding claims, **characterised in that** said housing (11) is arranged laterally on the external side of said pedal body (1) and is open at least to the rear.

6. Automatic pedal according to any one of the preceding claims, **characterised in that** the rear end of said elastic member (10) is freely received in a rear recess (12) provided in the lower part of said rear hooking member (6) and offset downwards relative to said axis of rotation (9) thereof.

7. Automatic pedal according to Claim 6, **characterised in that** said rear recess (12) has a rounded base which is complementary to the shape of the rear end of said elastic member (10) so as to form a pivot link.

8. Automatic pedal according to Claim 7, **characterised in that** the front end of said elastic member (10) is freely received in a front recess (14) provided in said housing (11), said recess having a rounded base which is complementary to the shape of the front end of said elastic member (10) so as to form a pivot link.

9. Automatic pedal according to any one of Claims 6 to 8, **characterised in that** at least the rear end of said elastic member (10) is provided with a U-shaped fitting (15).

10. Automatic pedal according to any one of Claims 6 to 9, **characterised in that** said rear recess (12) is arranged in an extension (13) of said rear hooking member (6) towards the bottom.

11. Automatic pedal according to Claim 10, **characterised in that** said extension (13) is immediately below said rear recess (12) deflected to the front so as to extend the lower part thereof.

12. Automatic pedal according to any one of the preceding claims, **characterised in that** said elastic member (10) extends over at least two thirds of the length of the pedal body (1).

13. Automatic pedal according to any one of the preceding claims, **characterised in that** said elastic member (10) is vertically stressed in buckling towards the bottom.

14. Automatic pedal according to any one of Claims 1 to 12, **characterised in that** said elastic member (10) is vertically stressed in buckling towards the top.

15. Automatic pedal according to any one of Claims 1 to 12, **characterised in that** said elastic member (10) is horizontally stressed in buckling towards the outside.

16. Automatic pedal according to any one of Claims 1 to 12, **characterised in that** said elastic member (10) is horizontally stressed in buckling towards the inside.

17. Automatic pedal according to any one of the preceding claims, **characterised in that** a stop is provided in said housing to limit the buckling of said elastic member (10) in a single direction.

## Patentansprüche

1. Automatisches Radpedal mit einem Pedalkörper (1) der drehbar auf einer Pedalachse (2) montiert ist, die mit einer Tretkurbel verbindbar ist, wobei der Pedalkörper (1) Mittel (4, 6) zum Ankoppeln einer Befestigungsplatte (3) aufweist, die unter einem Schuh eines Radfahrers befestigt ist, wobei die Mittel zum Ankoppeln ein vorderes, festes Ankopplungsorgan (4) sowie ein hinteres, bewegliches Ankopplungsorgan (6) umfassen, das auf den Pedalkörper (1) rotierbar um eine Drehachse (9), die im wesentlichen zur Pedalachse (2) parallel ist, montiert ist, und zwar verschwenkbar zwischen einer Stellung zum Festhalten der Platte (3) in Eingriff mit den vorderen und hinteren Ankopplungsorganen (4, 6) und einer Stellung zur Freigabe der Platte (3) durch das Verschwenken des hinteren Ankopplungsorgans (6) entgegen der Wirkung eines elastischen Rückstellmittels (10), das in einer Aufnahme (11) des Pedalkörpers (1) sitzt und dessen eines Ende an das hintere Ankopplungsorgan (6) angeschlossen ist, während das andere Ende am Pedalkörper (1) befestigt ist, **dadurch gekennzeichnet, daß** das elastische Rückstellmittel ein längliches elastisches Organ (10) umfaßt, das sich in einer Längsebene relativ zum Pedalkörper (1) derart erstreckt, daß es entlang seiner Längsachse durch das hintere Ankopplungsorgan (6) auf Knicken beansprucht ist, wenn dieses in die Freigabestellung für die Befestigungsplatte verschwenkt wird.

2. Automatisches Radpedal nach Anspruch 1, **dadurch gekennzeichnet, daß** das elastische Organ (10) in Knickrichtung vorgespannt ist.

3. Automatisches Radpedal nach Anspruch 1 oder 2, **dadurch gekennzeichnet, daß** das elastische Organ (10) ein Blatt ist.

4. Automatisches Radpedal nach Anspruch 3, **dadurch gekennzeichnet, daß** das Blatt (10) aus Verbundmaterial besteht.

5. Automatisches Radpedal nach einem der vorhergehenden Ansprüche, **dadurch gekennzeichnet, daß** die Aufnahme (11) seitlich der Außenseite des Pedalkörpers (1) vorgesehen und wenigstens nach hinten hin offen ist.

6. Automatisches Radpedal nach einem der vorhergehenden Ansprüche, **dadurch gekennzeichnet, daß** das hintere Ende des elastischen Organs (10) frei in einer hinteren Aufnahme (2) sitzt, die im unteren Abschnitt des hinteren Ankopplungsorgans (6) vorgesehen und nach hinten relativ zur Drehachse (9) desselben verkippt ist.

7. Automatisches Radpedal nach Anspruch 6, **dadurch gekennzeichnet, daß** die hintere Aufnahme (12) einen zur Form des hinteren Endes des elastischen Organs (10) komplementär gerundeten Boden derart aufweist, daß eine Zapfenverbindung ausgebildet wird.

8. Automatisches Radpedal nach Anspruch 7, **dadurch gekennzeichnet, daß** das vordere Ende des elastischen Organs (10) frei in einer vorderen Ausnehmung (14) aufgenommen ist, die in der Aufnahme (11) vorgesehen ist und einen zur Form des vorderen Endes des elastischen Organs (10) komplementären gerundeten Boden aufweist derart, daß eine Zapfenverbindung ausgebildet wird.

9. Automatisches Radpedal nach einem der Ansprüche 6 bis 8, **dadurch gekennzeichnet, daß** wenigstens das hintere Ende des elastischen Organs (10) mit einem Aufsatz in U-Form versehen ist.

10. Automatisches Radpedal nach einem der Ansprüche 6 bis 9, **dadurch gekennzeichnet, daß** die hintere Aufnahme (12) in einer Verlängerung (13) des hinteren Ankopplungsorgans (6) nach hinten vorgesehen ist.

11. Automatisches Radpedal nach Anspruch 10, **dadurch gekennzeichnet, daß** die Verlängerung (13) unmittelbar unterhalb der hinteren Aufnahme (12) nach vorne umgebogen ist derart, daß sie deren unteren Abschnitt verlängert.

12. Automatisches Radpedal nach einem der vorhergehenden Ansprüche, **dadurch gekennzeichnet, daß** sich das elastische Organ (10) über mindestens zwei Drittel der Länge des Pedalkörpers (1) erstreckt.

13. Automatisches Radpedal nach einem der vorhergehenden Ansprüche, **dadurch gekennzeichnet, daß** das elastische Organ (10) auf Knickung vertikal nach unten belastet ist.

14. Automatisches Radpedal nach einem der Ansprüche 1 bis 12, **dadurch gekennzeichnet, daß** das elastische Organ (10) auf Knickung vertikal nach oben belastet ist.

15. Automatisches Radpedal nach einem der Ansprüche 1 bis 12, **dadurch gekennzeichnet, daß** das elastische Organ (10) horizontal nach außen auf Knickung belastet ist.

16. Automatisches Radpedal nach einem der Ansprüche 1 bis 12, **dadurch gekennzeichnet, daß** das elastische Organ (10) horizontal nach innen auf Knickung belastet ist.

17. Automatisches Radpedal nach einem der vorhergehenden Ansprüche, **dadurch gekennzeichnet, daß** in der Aufnahme ein Anschlag vorgesehen ist, um das Ausknicken des elastischen Organs auf eine einzige Richtung zu beschränken.
